(19)

Europäisches Patentamt
European Patent Office
Office européen des brevets

(11)   EP 4 030 744 B1

(12)   **EUROPEAN PATENT SPECIFICATION**

(45) Date of publication and mention
of the grant of the patent:
**22.01.2025  Bulletin 2025/04**

(21) Application number: **20867158.6**

(22) Date of filing: **14.09.2020**

(51) International Patent Classification (IPC):
*H04N 23/00* *(2023.01)*

(52) Cooperative Patent Classification (CPC):
**G03B 5/00; G02B 7/021; G02B 7/102; G02B 7/282;
H01F 7/0289; H01F 7/066; H04M 1/0264;
H04N 23/55; H04N 23/57; H04N 23/67;
H04N 23/69;** G02B 15/144111; G03B 30/00;
G03B 2205/0046; G03B 2205/0069;        (Cont.)

(86) International application number:
**PCT/CN2020/115091**

(87) International publication number:
**WO 2021/057529 (01.04.2021 Gazette 2021/13)**

(54) **CAMERA MODULE AND TERMINAL DEVICE**

KAMERAMODUL UND ENDGERÄT

MODULE DE CAMÉRA ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.09.2019  CN 201910927693**

(43) Date of publication of application:
**20.07.2022  Bulletin 2022/29**

(73) Proprietor: **Huawei Technologies Co., Ltd.
Longgang District
Shenzhen, Guangdong
518129 (CN)**

(72) Inventors:
• **LIAO, Wenzhe
Shenzhen, Guangdong 518129 (CN)**
• **LI, Ming
Shenzhen, Guangdong 518129 (CN)**
• **FENG, Jun
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
WO-A1-2019/002448       WO-A1-2019/164335
CN-A- 101 000 385       CN-A- 101 632 030
CN-A- 103 472 562       CN-A- 104 597 535
CN-A- 108 603 951       CN-A- 109 839 713
CN-A- 109 975 973       US-A- 5 729 510
US-A1- 2011 290 887

(52) Cooperative Patent Classification (CPC): (Cont.)
G03B 2205/0084

## Description

## TECHNICAL FIELD

This disclosure relates to the field of electronic technologies, and in particular, to a camera module and a terminal device.

## BACKGROUND

An electronic device such as a mobile phone gradually becomes an indispensable product in public life. With development of electronic technologies, functions of the electronic device continuously increase, including at least functions such as communication, Internet access, and shooting. Quality of shooting directly affects use experience of the electronic device. Implementation of the shooting function of the electronic device relies on a camera module in hardware to complete image capture, and relies on operation of an algorithm in software, so as to finally achieve shooting experience required by a user.

When using the electronic device to perform shooting, the user sometimes wants to perform wide-angle shooting, and sometimes wants to perform long-focus shooting. Therefore, a requirement of the user for zooming of the camera module becomes stronger. In an existing product such as a mobile phone or a tablet computer, a single lens usually has only a capability of performing fixed-focus shooting. Zooming is completed through splicing by using a plurality of fixed-focus lenses. When shooting is performed, lenses of different focal lengths are invoked based on different zooming requirements. However, this solution causes two problems: One is that for shooting characteristics of higher quality and a larger focal length, a plurality of lenses are needed for splicing, resulting in an increase in difficulty in appearance design. In this case, positions usually need to be reserved on a compact rear housing of a conventional mobile phone for various lenses, and a quantity of front-facing lenses is hardly increased unless a screen-to-body ratio thereof is decreased. The other problem is that the manner of performing splicing by using the plurality of fixed-focus lenses causes an "interruption" problem in picture quality, that is, a picture quality degradation problem exists between different zooming magnifications.

Document US 2011/290887 A1 relates to a lens element that includes a housing defining a center bore and an optical axis, and a light transmissive cover coupled to the housing. A first elastic solid lens is disposed within the housing adjacent the light transmissive cover, and is characterized by a first thickness and a first durometer hardness. A second elastic solid lens is disposed in the housing adjacent to and substantially conforming to the first elastic solid lens, and is characterized by a second thickness and a second durometer hardness. The second lens thickness is less than the first lens thickness, and the second durometer hardness is greater than the first durometer hardness. Document CN 109 839 713 A discloses a zoom assembly, which is applied to realize focusing of a lens assembly. The zoom assembly comprises a deformation lens, a squeezing member and a driving member, wherein the squeezing member can be bonded with the deformation lens; the deformation lens is a lens capable of changing a focal length by deformation; the driving member is used for driving the squeezing member to squeeze the deformation lens to change the shape of the deformation lens to change the focal length of the deformation lens. The zoom assembly can be applied to focusing in various shooting scenes, has a simple structure, is easy to install and occupies small space.

## SUMMARY

This disclosure provides a camera module, to resolve a problem that a quantity of camera modules (or lenses) in a terminal device is large and costs are high.

The present invention is set out by the set of appended claims. In the following, parts of the description and drawing referring to examples or implementations, which are not covered by the claims are not presented as embodiments of the invention, but as illustrative examples useful for understanding the invention. The embodiments of the invention are determined by the appended claims.

## BRIEF DESCRIPTION OF DRAWINGS

FIG. 1 is a schematic diagram of imaging of a camera module;
FIG. 2 is a schematic diagram of a structure of a camera module according to an example of this disclosure;
FIG. 3 is a schematic diagram of a first soft film lens of a camera module according to an example of this disclosure;
FIG. 4 is a schematic diagram of a structure of a camera module according to another example of this disclosure;
FIG. 5 is a schematic diagram of arrangement of magnetic bodies of a camera module according to another example of this disclosure;
FIG. 6 is a schematic diagram of arrangement of a first magnetic body and a corresponding second magnetic body that are of a camera module according to another example of this disclosure;
FIG. 7 is a schematic diagram of a structure of a camera module according to another example of this disclosure;
FIG. 8 is a schematic diagram of a line connection manner of a zooming coil and a compensation coil in a camera module according to another example of this disclosure;

FIG. 9 is a schematic diagram of a line connection manner of a zooming coil and a compensation coil in a camera module according to another example of this disclosure;

FIG. 10 is a schematic diagram of a structure of a camera module according to another example of this disclosure;

FIG. 11 is a schematic diagram of a structure of a camera module according to another example of this disclosure;

FIG. 12 is a schematic diagram of a structure of a camera module according to another example of this disclosure;

FIG. 13 is a schematic diagram of a structure of a camera module according to another example of this disclosure;

FIG. 14 is a schematic diagram of a structure of a camera module according to another example of this disclosure;

FIG. 15 is a schematic diagram of a structure of a camera module according to another example of this disclosure;

FIG. 16 is a schematic diagram of a structure of a camera module according to another example of this disclosure;

FIG. 17 is a flowchart of a zooming method performed by using a camera module according to an example of this disclosure;

FIG. 18 is a flowchart of a zooming method performed by using a camera module according to an example of this disclosure in a case of a plurality of camera modules; and

FIG. 19 is a schematic diagram of a terminal device that includes a camera module according to an example of this disclosure.

## DETAILED DESCRIPTION

Before the examples of this disclosure are explained and described in detail, application scenarios in the examples of this disclosure are described first.

A camera function of an electronic device such as a mobile phone is to shoot a static picture or a dynamic video by using a built-in digital camera or an external digital camera. As a new additional function of the electronic device, a shooting capability of the electronic device has become one of the most concerned indexes. Implementation of a shooting function of the electronic device relies on an optical module in hardware to complete image capture, and relies on operation of an algorithm in software, so as to finally achieve shooting experience required by a user. In addition to an imaging function, most important technologies in the optical module further include zooming and focusing technologies.

A focal length is a measurement manner of measuring convergence or divergence of light in an optical system, and refers to a distance from a center of a lens to a focal point of light convergence when parallel light is incident. A shorter focal length indicates a larger field of view. In a case of a definite focal length, a larger image surface (that is, an effective operating surface of a sensor in the camera module) indicates a larger field of view. Generally, a focal length of the optical module is fixed.

Focusing refers to a process in which a distance between an image surface and a lens is changed based on different positions in which objects at different distances are clearly imaged in a rear part of the lens, so that a photographed object is clearly imaged. Because a depth of field exists in all imaging systems, if the photographed object is outside the depth of field, an image is blurred after the object is photographed. To ensure clear presentation of the photographed object, focusing needs to be performed.

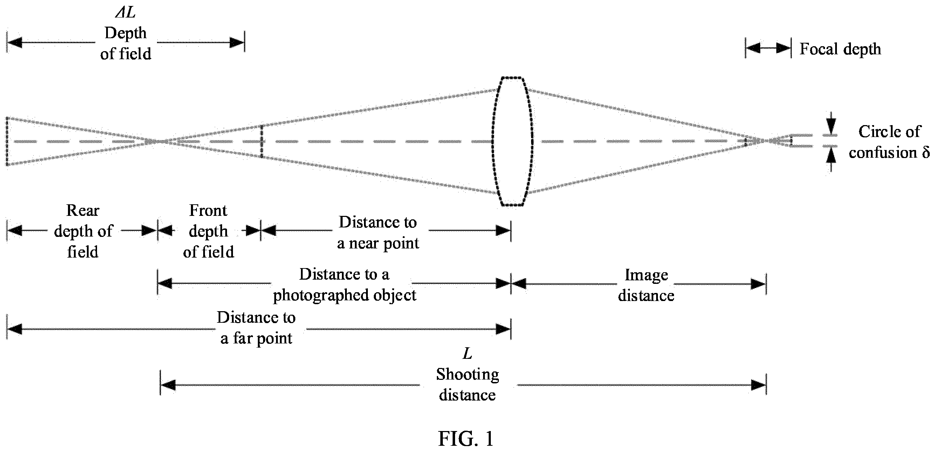

The depth of field is a depth for clear imaging in an optical imaging system. The depth of field is a physical phenomenon, but values of depths of field of different optical systems are different. FIG. 1 is a schematic diagram of lens imaging, where $\Delta L$ represents a depth of field, and L represents a shooting distance. A value of the depth of field is related to parameters of an optical lens, such as a focal length f and an F-stop (F-number) of the lens, and is also related to a diameter $\delta$ of a circle of confusion that a used sensor can distinguish.

A relationship between the foregoing parameters is described by using the following formula:

$$\Delta L = \frac{2f^2 F \delta L^2}{f^4 - F^2 \delta^2 L^2}.$$

As the user is increasingly dependent on the mobile phone, requirements for the mobile phone also become more diverse. For example, the user sometimes needs to photograph a beautiful scene with a wide angle, and the user sometimes also needs to shoot a distant portrait. Because different scenarios need to be photographed, both a wide-angle camera and a long-focus camera need to be used. Therefore, a zooming requirement of a common user on the camera module becomes stronger.

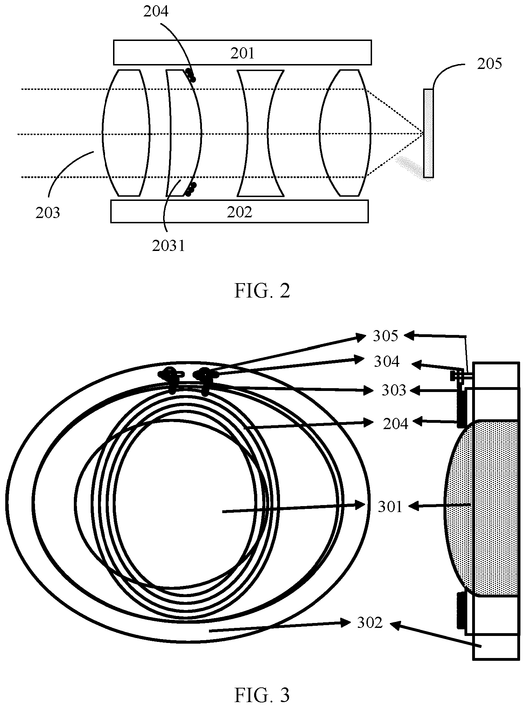

In view of this, an example of this disclosure provides a camera module. As shown in FIG. 2, the camera module includes two first magnetic bodies (201, 202), a lens group 203 (in FIG. 2, the lens group 203 includes four lenses), a zooming coil 204, and a sensor 205.

The two first magnetic bodies (201, 202) are respectively located on two opposite sides of the lens group 203, to form a magnetic field. The lens group 203 includes a first soft film lens 2031. The zooming coil 204 is connected to a soft film of the first soft film lens 2031, and the zooming coil 204 may be located on an edge of an outer surface of the first soft film lens 2031, to connect to the soft film. A specific structure of the first soft film lens 2031 and the zooming coil 204 may be shown in FIG. 3. Alternatively, the zooming coil 204 may be located on an edge of an inner surface of the first soft film lens 2031, that is, may be located inside the first soft film lens 2031, to connect to the soft film. When the zooming coil 204 is energized, a Lorentz force is generated under action of a magnetic field, to push the zooming coil 204 to move, so as to extrude or drag the soft film of the first soft film lens 2031, and change a shape of the first soft film lens 2031, that is, change a surface type of the first soft film lens 2031, such as a curvature or another parameter, thereby changing a focal length of the lens group, and implementing a zooming function. The sensor 205 is configured to receive a light beam incident through the lens group 203.

The first soft film lens may be formed in a manner of wrapping liquid or gel by using the soft film, or the first soft film lens may be formed in a manner of wrapping liquid or gel in a closed space including the soft film and a lens. The liquid may be oil, a solvent, ionic liquid, a liquid metal, and the like. The liquid is transparent or translucent substance. When being wrapped by the soft film, the liquid may be deformed under a force, to implement the zooming function. The coil located on the soft film lens may be a structure formed by winding a metal wire by a plurality of turns or only one turn, or even may be a circular metal ring, provided that the soft film of the soft film lens can be pushed in the magnetic field by the Lorentz force when the coil is energized. A similar coil in the subsequent examples may also have the foregoing structure, and details are not described in this disclosure again.

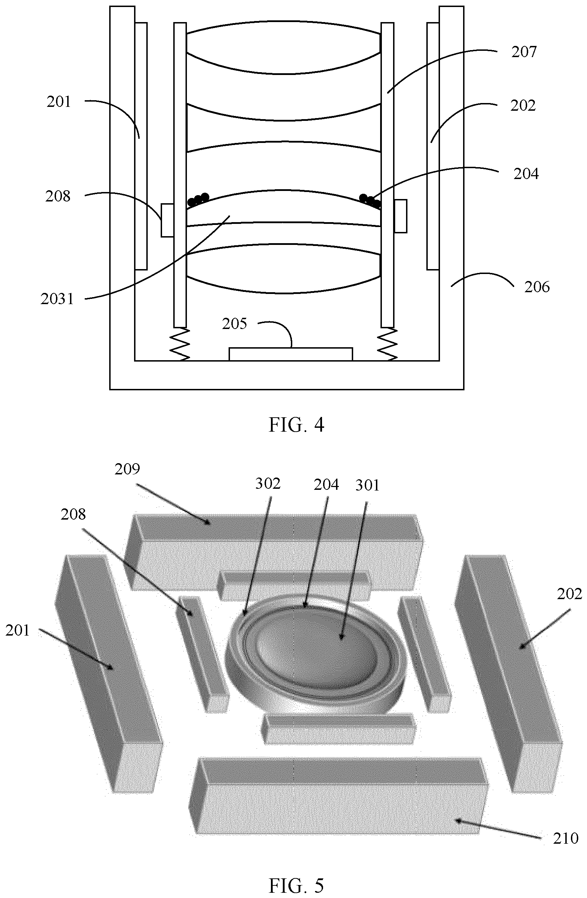

In addition, the camera module provided in this disclosure may further include an annular barrel 206 having an opening on a surface, where the sensor 205 is fastened onto a bottom surface that is inside the annular barrel 206 and that is opposite to the opening. The two first magnetic bodies (201, 202) are separately fastened inside the annular barrel 206, and are disposed, opposite to each other, on surfaces on two sides of the bottom surface of the annular barrel 206. In addition, the camera module further includes a lens cone 207 connected to the annular barrel 206. The lens cone 207 may be connected to the bottom surface or a side surface of the annular barrel 206 by using an apparatus such as a spring plate or a spring, so that the lens cone 207 can move. A specific structure of the lens cone 207 and the annular barrel 206 is shown in FIG. 4.

Further, as shown in FIG. 3, the first soft film lens 2031 includes a soft film deformation area 301 and a lens fastening area 302, where the lens fastening area 302 is configured to fasten a lens onto the lens cone 207. The camera module further includes a conductive rod 305 located in the lens fastening area 302 and a slidable conductive apparatus 304 connected to the conductive rod 305, where the conductive rod 305 is connected to a power supply circuit (in a terminal device, if the power supply circuit is connected to a processor, it may also be understood as that the conductive rod 305 is connected to the processor), and is configured to conduct electricity; and the slidable conductive apparatus 304 may move along the conductive rod 305, and is connected to the zooming coil 204 by using a lead 303. When the zooming coil 204 is energized, the Lorentz force is generated under action of the magnetic field, and the Lorentz force pushes the zooming coil 204 to change a position thereof. A lead 303 with relatively good rigidity is used, so that the slidable conductive apparatus 304 can move as the zooming coil 204 moves, and a relative position of the lead 303 remains unchanged, and stability is better. Certainly, the lead may be alternatively directly connected to the power supply circuit inside the terminal. However, a segment of lead needs to be reserved, to ensure that the lead may still be connected to the coil when the coil moves to a farthest distance from the power supply circuit. In this case, the lead always swings correspondingly when the coil moves, resulting in relatively poor stability. It should be understood that, in this disclosure, the rigidity of the lead 303 may be within any range, provided that the slidable conductive apparatus 304 can be driven; and the slidable conductive apparatus 304 may be a slidable ring or in any other form, provided that the slidable conductive apparatus 304 can move along the conductive rod 305.

It should be noted that, a soft film lens structure in the subsequent examples is similar to the foregoing soft film lens structure, and details are not described in this disclosure again. In the lens group, lenses other than the soft film lens each also have a lens fastening area. Each of the lenses is fastened to a corresponding lens cone by using the lens fastening area. However, because there is no coil on outer surfaces or inner surfaces of these lenses, there is no apparatus such as a conductive rod or a lead in the lens fastening areas of these lenses.

In this example of this disclosure, the magnetic body is an object that may generate a magnetic field, for example, a magnet or a lodestone. There may be more than two first magnetic bodies, for example, four first magnetic bodies are relatively located around the lens group 203, or six first magnetic bodies relatively surround the lens group 203. FIG. 5 is a schematic diagram of an example in which there are four first magnetic bodies (201, 202, 209, and 210). All the first magnetic bodies may be fastened inside the annular barrel 206. In the subsequent examples of this disclosure, an example in which there are two first magnetic bodies is used for description. Optionally, the camera module further includes a second magnetic body 208 located between the first magnetic body and the first soft film lens. The second magnetic body 208 may be fastened onto the lens cone 207, or may be integrated inside the lens cone 207, as shown in FIG. 4. The second magnetic body is in a one-to-one correspondence with the first magnetic body. A structure of the second magnetic body and the first magnetic body may be shown in FIG. 5 (for clear illustration, a structure such as the lens cone is not shown in the figure). It should be understood that, a shape of the first magnetic body and a shape of the second magnetic body each may be alternatively a curved shape, to surround the soft film lens. A specific shape is not limited.

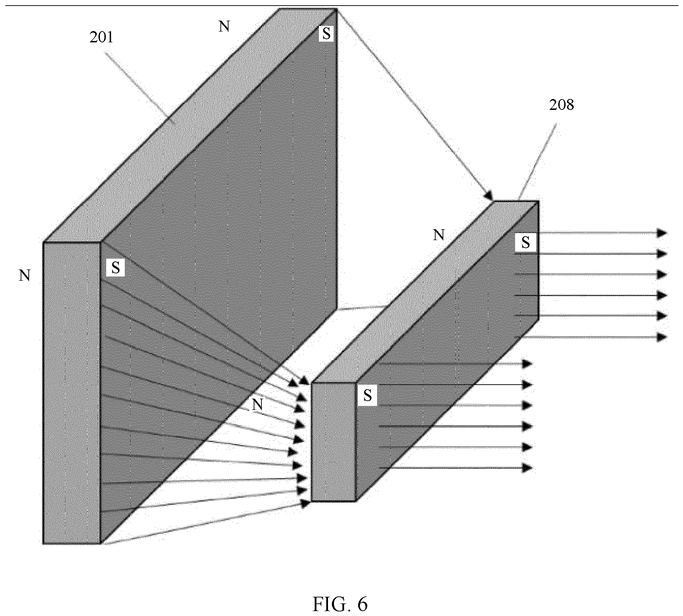

In addition, a polarity direction of the second magnetic body 208 is the same as a polarity direction of the corresponding first magnetic body 201. As shown in FIG. 6, if polarity of a surface that is of the first magnetic body 201 and that faces the second magnetic body 208 is a south pole (S pole), polarity of a surface that is of the second magnetic body 208 and that faces the first magnetic body 201 is a north pole (N pole). Otherwise, if polarity of a surface that is of the first magnetic body 201 and that faces the second magnetic body 208 is an N pole, polarity of a surface that is of the second magnetic body 208 and that faces the first magnetic body 201 is an S pole. In this case, the second magnetic body 208 may converge a magnetic field of the first magnetic body 201, to enhance the magnetic field. Therefore, in a case of a same current, the Lorentz force generated by the zooming coil 204 is increased, and a deformation amount of the first soft film lens 2031 is increased. When the camera module is used in a small terminal device such as a mobile phone, because a current cannot be particularly high, strength of the Lorentz force is limited, so that the first soft film lens 2031 cannot achieve a better zooming effect. In this example, the second magnetic body 208 is used to implement magnetic field convergence, so that this problem can be resolved.

It should be understood that, a third magnetic body may also exist between a second soft film lens mentioned below in this disclosure and the first magnetic body, so as to converge the magnetic field of the first magnetic body, and increase a deformation amount of the second soft film lens. A fourth magnetic body may also exist between a third soft film lens and the first magnetic body, so as to converge the magnetic field of the first magnetic body, and increase a deformation amount of the third soft film lens. Features of the third magnetic body and features of the fourth magnetic body are the same as those of the second magnetic body, and if there are more soft film lenses, there may also be magnetic bodies that correspond to the soft film lenses and that play a role of magnetic field convergence. Details are not described in this example of this disclosure again.

The camera module provided in this disclosure may be further used in a terminal device such as a mobile phone, a tablet computer, or a vehicle, and serve as a camera of the mobile phone, an event data recorder in a vehicle-mounted device, or another camera device. The camera module may be a conventional camera module, or may be a folded camera module. The processor inside the terminal device processes image information captured by the sensor 205, parses a zooming requirement conveyed by the user, and drives the camera module based on the zooming requirement to complete optical zooming.

Specifically, after the light beam is incident through the lens group 203, the light beam is converged onto the sensor 205. To prevent the zooming coil 204 from blocking entry of the light beam, a light blocking area of the zooming coil 204 needs to be less than 1/4 or 1/3 of an area of a surface that is in the first soft film lens 2031 and that is connected to the zooming coil 204. A specific value of the light blocking area is not limited. In addition, the lens group 203 may further include a plurality of lenses, for example, four or six lenses. In FIG. 2, four lenses are used as an example. This is not limited in this disclosure. The sensor 205 may be an image sensor, for example, a complementary metal oxide semiconductor (CMOS) image sensor, a charge-coupled device (CCD) image sensor, or the like. An image returned by the sensor 205 is a preview shot by the terminal device. If the user enlarges the preview or taps a zooming button such as 2x or 5x, the processor of the terminal device obtains a zooming requirement signal, and controls an energization amount of the zooming coil 204 based on the zooming requirement signal given by the user. Power of the zooming coil 204 may come from a power supply device in a device, for example, if the camera module is used in a mobile phone or a tablet computer, the power may come from a battery of the mobile phone or the tablet computer. A Lorentz force is generated under action of a magnetic field after the coil is energized, so that the coil moves, thereby extruding or dragging the first soft film lens 2031 to deform, changing the focal length, and implementing an optical zooming function. The energization amount may be continuously changed, so that the first soft film lens 2031 can be continuously deformed, thereby implementing a continuous optical zooming function.

According to the camera module provided in this disclosure, the zooming coil is disposed on the edge of the outer surface or the inner surface of the first soft film lens, so that the continuous optical zooming function can be implemented, real images are captured, and an imaging effect is better. An overall structure of the camera module is relatively compact, so that the camera module can be used in a terminal device with a limited space, such as a mobile phone. In addition, compared with a currently commonly used solution of implementing a zooming capability in a manner of performing splicing by using a plurality of fixed-focus lenses, the camera module of this disclosure has an optical zooming capability, that is, a single lens may implement a zooming capability implemented by two fixed-focus lenses, for example, a single camera module of this disclosure may implement a continuous change of a 1-2-fold focal length. In the conventional technology, a 1-2-fold zooming effect needs to be achieved by using a combination of a 1-fold fixed-focus lens and a 2-fold fixed-focus lens. In addition, optical zooming in this disclosure is continuous, the real images are captured, and the imaging effect is better. Further, dual lenses of this disclosure may achieve an effect achieved by more fixed-focus lenses. Therefore, a quantity of the camera modules in the terminal device may be reduced, and it can be further ensured that the optical zooming capability is not weakened.

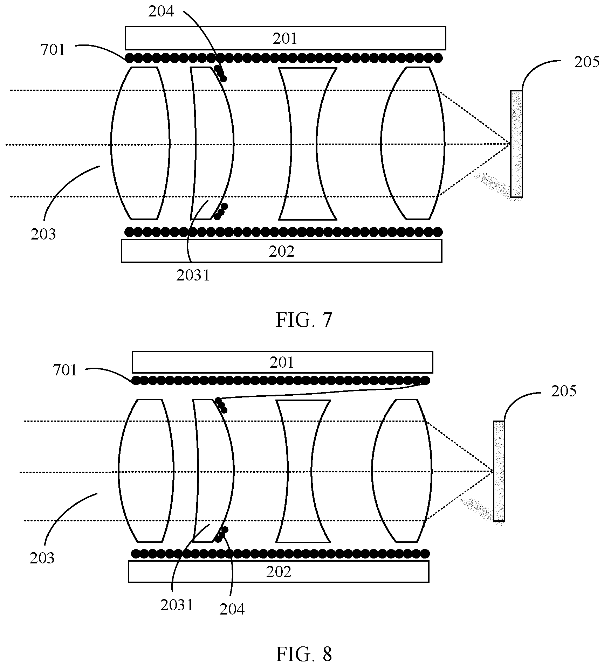

According to a first option of the invention, the camera module further includes a first compensation coil 701. As shown in FIG. 7, the first compensation coil 701 is located between the two first magnetic bodies (201, 202), and the lens group 203 is located in a space formed by the first compensation coil 701. Specifically, all lenses included in the lens group 203 are located in the space formed by the first compensation coil 701, or some lenses included in the lens group 203 are located in the space formed by the first compensation coil 701. For example, the lens group 203 includes four lenses, and one, two, or three lenses may be located in the space formed by the first compensation coil, or all the four lenses may be located in the space formed by the first compensation coil. When the first compensation coil 701 is energized, a Lorentz force is generated under action of a magnetic field, so that the lens group 203 moves, and a position of the lens group 203 is changed, thereby changing an image distance of the camera module, and implementing compensation (or implementing zooming). In addition, the Lorentz force generated by the first compensation coil 701 may alternatively only push some lenses in the lens group 203 to move, thereby implementing compensation as well.

An operating procedure of this example of this disclosure is as follows: For example, the sensor 205 returns a preview shot by the terminal device, the user taps a zooming button such as 2x or 5x, and the processor of the terminal device obtains a zooming requirement signal. The processor controls energization for the zooming coil 204 based on the zooming requirement signal given by the user, the energized coil generates a Lorentz force under action of a magnetic field, so that the first soft film lens 2031 is deformed, thereby changing the focal length, and implementing the optical zooming function. After zooming is completed, if the preview is still not clear enough, the processor gradually increases a current for the first compensation coil 701, to drive the lens group 203 to move or drive some lenses in the lens group 203 to move, thereby implementing zooming compensation. When an image signal transmitted by the sensor 205 is clear, the processor stops increasing the current for the first compensation coil 701, to complete compensation.

Specifically, the first compensation coil 701 is fastened onto the lens cone 207, the lens group 203 is connected to the lens cone 207, and the Lorentz force generated after the first compensation coil 701 is energized causes the first compensation coil 701 to drive the lens cone 207 to move, thereby changing a position of a lens in the lens group 203. In addition, the lens cone 207 may also fasten the lens group 203. Further, the lenses in the lens group 203 may not all be connected to the lens cone 207, for example, if the lens group includes six lenses, four or five lenses may be connected to the lens cone 207. A specific quantity is not limited. The remaining lenses may be connected to the annular barrel 206 by using a fastening part or another fastening apparatus. The Lorentz force generated after the first compensation coil 701 is energized causes the first compensation coil 701 to drive the lens cone 207 to move, so that lenses that are connected to the lens cone 207 are moved, and positions of the remaining lenses remain unchanged.

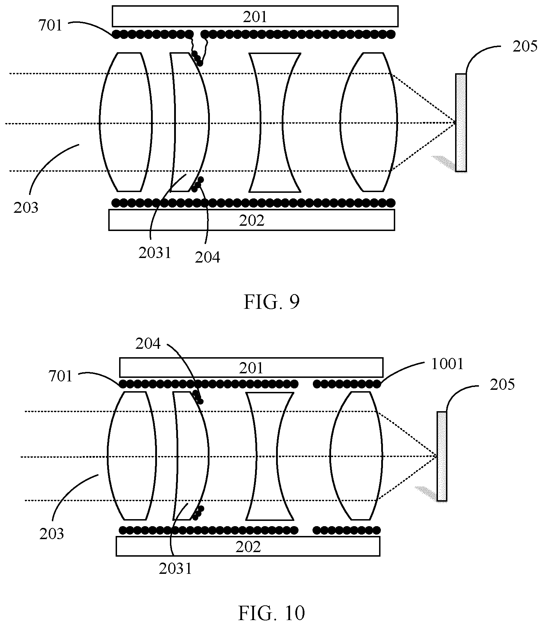

In addition, parameters of each lens in the lens group (for example, whether a lens is a concave lens or a convex lens and a curvature radius of each lens) and a distance between lenses may be determined through optical design. After the determining is completed, a correspondence between a focal length change value of the lens group 203 and a displacement value of the lens group 203 may be calculated, and the focal length change value is in a one-to-one correspondence with the displacement value of the lens group 203. That is, in this case, a force generated by the zooming coil 204 is also in a one-to-one correspondence with a force generated by the first compensation coil 701. Therefore, a quantity of turns and a single-turn length of the zooming coil 204 and a quantity of turns and a single-turn length of the first compensation coil 701 may be designed in advance, so that the zooming coil 204 and the first compensation coil 701 can be connected in series, and after current loading, a compensation function can be implemented while zooming is performed. In this case, one end of the zooming coil 204 may be connected to one end of the first compensation coil 701, as shown in FIG. 8. Alternatively, according to a principle of proximity, it is equivalent to disconnecting the first compensation coil 701 at a part that is relatively close to the zooming coil 204, and two disconnected ports are respectively connected to two ends of the zooming coil 204, as shown in FIG. 9. Alternatively, there may be another connection manner. This is not limited in this disclosure.

Usually, after the quantity of turns and the single-turn length of the zooming coil 204 and the quantity of turns and the single-turn length of the first compensation coil 701 are designed, a relatively ideal image may be obtained through current control. If the obtained image is not clear enough because of a special reason (for example, a factor such as an assembly error or a decrease in stability of a lens after operating for a long time), the camera module needs to be further adjusted. For this case, another example of this disclosure provides the following two feasible manners.

(1) As shown in FIG. 10, the camera module may further include a first adjustment coil 1001. The first adjustment coil 1001 is also located between the two first magnetic bodies (201, 202). Some lenses included in the lens group 203 are located in a space formed by winding the first adjustment coil 1001. When the first adjustment coil 1001 is energized, a Lorentz force is also generated under action of a magnetic field, so that the position of the lens group 203 is changed, the image distance of the camera module is changed, and further adjustment is implemented. Therefore, the light beam is more accurately focused onto the sensor 205 to obtain a clearer image. Because the first adjustment coil 1001 plays a fine-tuning role based on the zooming coil 204 and the first compensation coil 701, there is no need to exert a large force on the lens group 203. Therefore, usually, the Lorentz force generated by the first adjustment coil 1001 is less than the Lorentz force generated by the first compensation coil 701. When a same current is exerted, a magnitude of a Lorentz force generated by a coil in a magnetic field is related to a quantity of turns and a single-turn length of the coil. If the single-turn length of the coil remains unchanged, the magnitude of the Lorentz force generated by the coil in the magnetic field is directly proportional to the quantity of turns of the coil. If the quantity of turns of the coil remains unchanged, the magnitude of the Lorentz force generated in the magnetic field is directly proportional to the single-turn length of the coil. Therefore, a quantity of turns of the first adjustment coil 1001 may be less than the quantity of turns of the first compensation coil 701 or a single-turn length of the first adjustment coil 1001 may be less than the single-turn length of the first compensation coil 701.

It should be understood that, the first compensation coil 701 is disconnected from the first adjustment coil 1001, and the first compensation coil 701 and the first adjustment coil 1001 may separately perform current loading. After adjustment of the zooming coil 204 and the first compensation coil 701 is completed, if the image still cannot meet a definition requirement, the first adjustment coil 1001 is started for further adjustment. Usually, because the first compensation coil 701 needs to push the lens group 203 to move for a longer distance, the space formed by winding the first compensation coil 701 is larger than the space formed by winding the first adjustment coil 1001. Therefore, a quantity of lenses in the space formed by winding the first compensation coil 701 is also larger than a quantity of lenses in the space formed by winding the first adjustment coil 1001.

In addition, some lenses included in the lens group 203 may be located in the space formed by the first compensation coil 701, and the remaining lenses may be located in the space formed by the first adjustment coil 1001. For example, the lens group includes four lenses, three lenses are located in the space formed by the first compensation coil 701, and one lens is located in the space formed by the first adjustment coil 1001. In this case, the Lorentz force generated by the first compensation coil 701 may push the three lenses in the space formed by the first compensation coil 701 to change positions thereof, so as to complete a compensation function; and the Lorentz force generated by the first adjustment coil 1001 may push the lens in the space formed by the first adjustment coil 1001 to change a position thereof, so as to further adjust the camera module. Certainly, two lenses may be alternatively located in the space formed by winding the first compensation coil 701, and the other two lenses may be located in the space formed by winding the first adjustment coil 1001. Alternatively, there may be another arrangement manner. This is not limited in this disclosure.

Optionally, the camera module includes a lens cone 207 connected to the annular barrel 206 by using a spring or a spring plate. As shown in FIG. 4, all or some lenses in the lens group 203 are connected to the lens cone 207, and both the first adjustment coil 1001 and the first compensation coil 701 are fastened onto the lens cone. The Lorentz force generated after the first compensation coil 701 is energized pushes the first compensation coil 701 to drive the lens cone 207 to move, thereby implementing compensation. If image definition still does not meet a requirement, the first adjustment coil 1001 is energized. In this case, a generated Lorentz force pushes the first adjustment coil 1001 to drive the lens cone 207 to move, thereby changing a position of a lens connected to the lens cone 207, and further implementing adjustment.

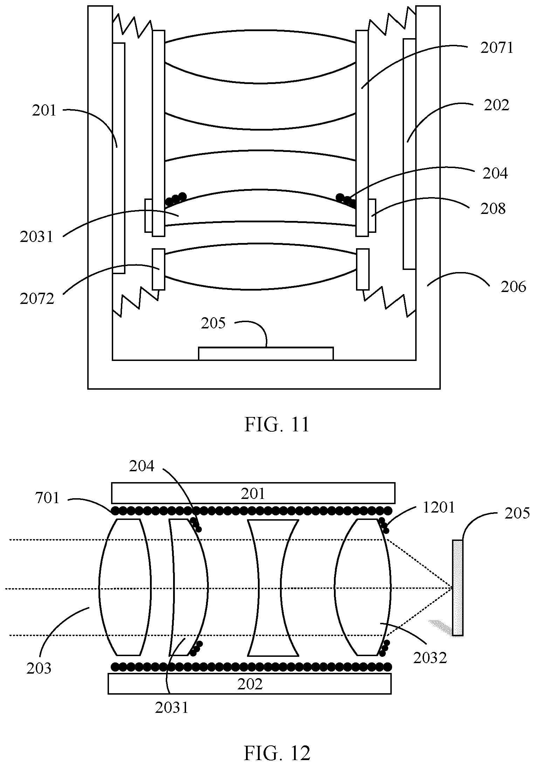

In addition, the lens cone may be further divided into a first lens cone 2071 and a second lens cone 2072, where some lenses in the lens group may be connected to the first lens cone 2071, and the remaining lenses may be connected to the second lens cone 2072. For example, as shown in FIG. 11, the lens group 203 includes four lenses, where three lenses are connected to the first lens cone 2071, and the remaining one lens is connected to the second lens cone 2072. The first lens cone 2071 and the second lens cone 2072 are not connected to each other, and are separately connected to the annular barrel 206 by using a deformable apparatus (a spring, a spring plate, or the like). The first compensation coil 701 is connected to the first lens cone 2071, and the first adjustment coil 1001 is connected to the second lens cone 2072. In this case, the Lorentz force generated after the first compensation coil 701 is energized pushes the first compensation coil 701 to drive the first lens cone 2071 to move, thereby changing a position of a lens connected to the first lens cone 2071, and implementing compensation. If image definition still does not meet a requirement, the first adjustment coil 1001 is energized. In this case, a generated Lorentz force pushes the first adjustment coil 1001 to drive the second lens cone 2072 to move, thereby changing a position of a lens connected to the second lens cone 2072, and further implementing adjustment.

(2) As shown in FIG. 12, the camera module further includes a second adjustment coil 1201, and the lens group 203 further includes a second soft film lens 2032. The second adjustment coil 1201 is connected to a soft film of the second soft film lens 2032. A specific structure of the second adjustment coil 1201 is similar to a structure of the zooming coil 204. The second adjustment coil 1201 may also be located on an edge of an outer surface of the second soft film lens 2032, to connect to the soft film, or located on an edge of an inner surface of the second soft film lens 2032, that is, located inside the second soft film lens 2032, to connect to the soft film, with reference to FIG. 3. When the second adjustment coil 1201 is energized, a Lorentz force is also generated under action of a magnetic field, to push the second adjustment coil to move, so as to extrude or drag the soft film of the second soft film lens 2032, so that a shape of the second soft film lens 2032 is changed, and the focal length of the lens group is fine-tuned. Because the focal length is changed, the image distance is also changed, the light beam is more accurately focused onto the sensor, and further adjustment is implemented. To prevent the second adjustment coil 1201 from blocking entry of the light beam, a light blocking area of the second adjustment coil 1201 also needs to be less than 1/4 or 1/3 of an area of a surface that is in the second soft film lens 2032 and that is connected to the second adjustment coil 1201. A specific value of the light blocking area is not limited.

Because the second adjustment coil 1201 plays a fine-tuning role based on the zooming coil 204 and the first compensation coil 701, there is no need to exert a large force on the soft film on the second soft film lens 2032. Therefore, the Lorentz force generated by the second adjustment coil 1201 is generally less than the Lorentz force generated by the zooming coil 204. When a same current is exerted, a magnitude of a Lorentz force generated by a coil in a magnetic field is related to a quantity of turns and a single-turn length of the coil. If the single-turn length of the coil remains unchanged, the magnitude of the Lorentz force generated by the coil in the magnetic field is directly proportional to the quantity of turns of the coil. If the quantity of turns of the coil remains unchanged, the magnitude of the Lorentz force generated in the magnetic field is directly proportional to the single-turn length of the coil. Therefore, a quantity of turns of the second adjustment coil 1201 may be less than the quantity of turns of the zooming coil 204 or a single-turn length of the second adjustment coil 1201 may be less than the single-turn length of the zooming coil 204.

It should be understood that, the second adjustment coil 1201 is also disconnected from another coil, and the second adjustment coil 1201 and the another coil may separately perform current loading. After adjustment of the zooming coil 204 and the first compensation coil 701 is completed, if the image still cannot meet a definition requirement, the second adjustment coil 1201 is started for further adjustment. In addition, the second soft film lens may be formed in a manner of wrapping liquid or gel by using the soft film, or may be formed in a manner of wrapping liquid or gel in a closed space including the soft film and a lens.

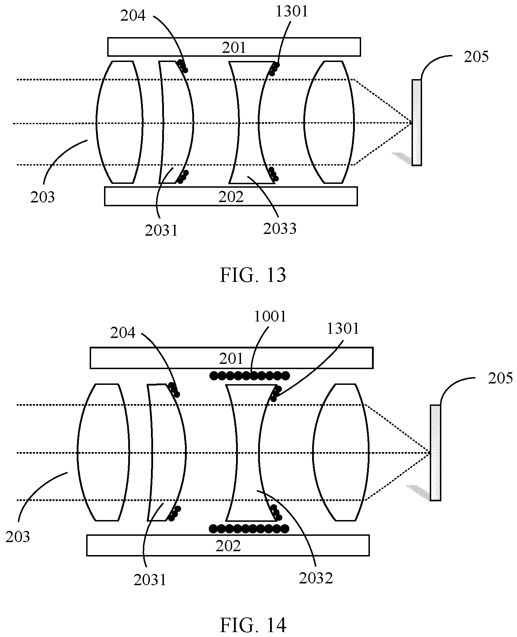

Further, another example of this disclosure provides a camera module. Based on FIG. 2, the camera module further includes a second compensation coil 1301, as shown in FIG. 13. In a second option of the invention as shown in FIG. 13, the lens group 203 further includes a third soft film lens 2033. The second compensation coil 1301 is connected to a soft film of the third soft film lens 2033. A specific structure of the second compensation coil 1301 is similar to the structure of the zooming coil 204 and the structure of the second adjustment coil 1201, with reference to FIG. 3. Details are not described in this disclosure again. When the second compensation coil 1301 is energized, a Lorentz force is also generated under action of a magnetic field, to change a shape of the third soft film lens 2033, and change the focal length of the lens group, thereby changing the image distance of the lens group, and implementing compensation. In this example, the lens group 203 does not need to move, and is simpler in design. Similarly, the third soft film lens may be formed in a manner of wrapping liquid or gel by using the soft film, or may be formed in a manner of wrapping liquid or gel in a closed space including the soft film and a lens. To prevent the second compensation coil 1301 from blocking entry of the light beam, a light blocking area of the second compensation coil 1301 also needs to be less than 1/4 or 1/3 of an area of a surface that is in the third soft film lens 2033 and that is connected to the second compensation coil 1301. A specific value of the light blocking area is not limited.

Optionally, parameters of each lens in the lens group (for example, whether a lens is a concave lens or a convex lens and a curvature radius of each lens) and a distance between lenses are determined through optical design. After the determining is completed, a correspondence between a focal length change value and an image distance change value of the lens group may be calculated, and the focal length change value is in a one-to-one correspondence with the image distance change value. In other words, under action of a same magnetic field, a force generated by the zooming coil 204 is also in a one-to-one correspondence with a force generated by the second compensation coil 1301. Therefore, the quantity of turns and the single-turn length of the zooming coil 204 and a quantity of turns and a single-turn length of the second compensation coil 1301 may be designed in advance, so that the zooming coil 204 and the second compensation coil 1301 can be connected in series, and after current loading, a compensation function can be implemented while zooming is performed.

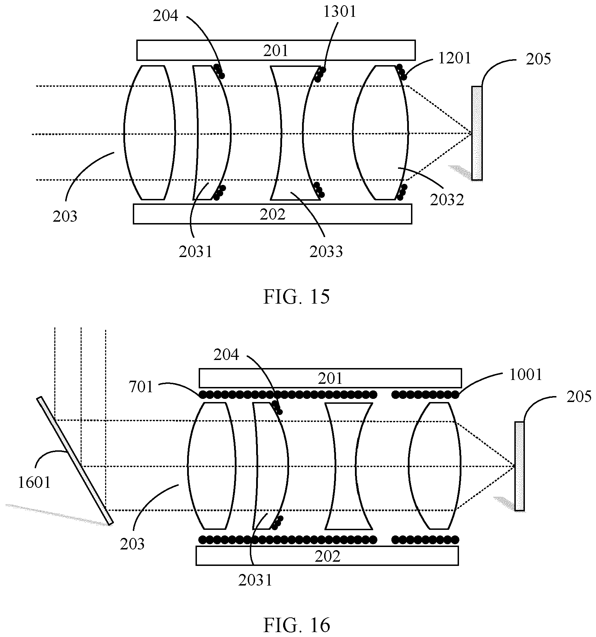

Usually, after the quantity of turns and the single-turn length of the zooming coil 204 and the quantity of turns and the single-turn length of the second compensation coil 1301 are designed, a relatively ideal image may be obtained through current control. If the obtained image is not clear enough because of a special reason (for example, a factor such as an assembly error or a decrease in stability of a lens after operating for a long time), for this case, this example of this disclosure may further include the first adjustment coil 1001 mentioned in the foregoing implementation, as shown in FIG. 14; or include the second adjustment coil 1201, as shown in FIG. 15. Specific principles and features have been described in detail in the foregoing implementations . Details are not described in this disclosure.

Optionally, based on the examples shown in FIG. 2 to FIG. 15, the camera module further includes a reflector 1601, configured to reflect an input light beam to the lens group 203, and fold a light path, so as to implement a periscope camera module, and reduce a volume of the camera module. A specific structure of the camera module is shown in FIG. 16. It should be understood that, FIG. 16 is a schematic diagram of a camera module obtained by adding a reflector based on one of structures represented in FIG. 2, FIG. 7 to FIG. 10, and FIG. 12 to FIG. 15. In addition, all the coils mentioned in the foregoing implementations are connected to the processor, and connections therebetween include a connection to the processor by using the power supply circuit, so that the processor controls energization amounts of the coils, and a zooming effect and an imaging effect of the camera module are adjusted.

Based on the foregoing implementations, the lens group further includes a first fixed lens, configured to focus a received light beam. The lens group may further include a second fixed lens, to further focus the light beam to converge the light beam onto the sensor 205. The light beam may pass through the first fixed lens, the soft film lenses, and the second fixed lens in sequence. Alternatively, the first fixed lens, the soft film lenses, and the second fixed lens may be arranged in another manner. This is not limited in this disclosure. It should be noted that, the lens group may further include more lenses, and added lenses may further focus the light beam to improve imaging quality.

The camera module disclosed in the examples of this disclosure may be used separately for shooting, or may be used together with another camera (for example, a fixed-focus lens). Certainly, a plurality of camera modules disclosed in this disclosure may be alternatively used together. A specific process is as follows:

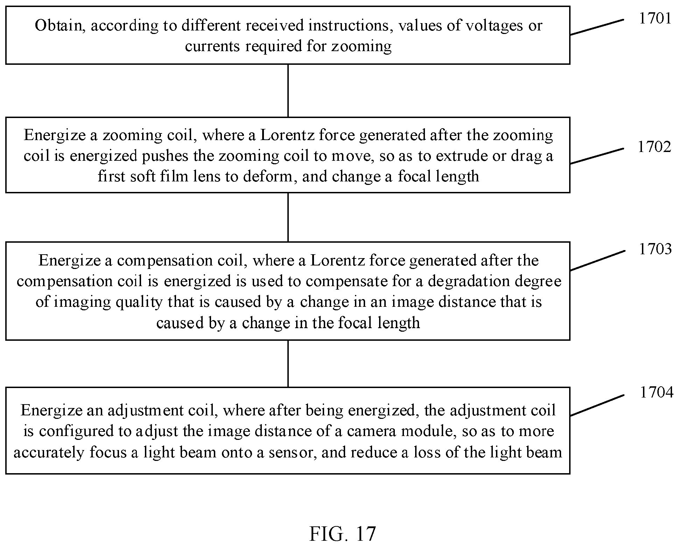

(1) A specific operating procedure of a single camera module disclosed in this disclosure is shown in FIG. 17.

1701. Obtain, according to different received instructions such as a 2-fold zooming magnification, values of voltages or currents required for zooming, where relationships between zooming magnifications and the voltages or currents supplied to corresponding coils may be pre-stored in a processor, for example, correspondences are stored in a form of a table or in a form of a function; and the processor may learn, based on the required zooming magnifications, the values of the voltages or currents supplied to the corresponding coils, where the corresponding coils include different coils mentioned in the foregoing different apparatus examples.

1702. Energize a zooming coil, where a Lorentz force generated after the zooming coil is energized pushes the zooming coil to move, so as to extrude or drag a first soft film lens to deform, and change a focal length. Optionally, the specific operating procedure of the camera module further includes: 1703. Energize a compensation coil, where a Lorentz force generated after the compensation coil is energized is used to compensate for a degradation degree of imaging quality that is caused by a change in an image distance that is caused by a change in the focal length. The camera module may be of the structures shown in FIG. 7 to FIG. 12, the compensation coil is the first compensation coil, and the Lorentz force generated by the first compensation coil controls the lens group or some lenses in the lens group to move, so as to change the image distance of the camera module, and implement compensation. Alternatively, the camera module may be of the structures shown in FIG. 13 to FIG. 15. In this case, the compensation coil is the second compensation coil, and the Lorentz force generated by the second compensation coil pushes the second compensation coil to move, so as to extrude the third soft film lens to deform, change the image distance of the camera module, and implement compensation.

Optionally, when the zooming coil and the compensation coil are connected in series, the specific operating procedure further includes: 1704. Energize an adjustment coil, where after being energized, the adjustment coil is configured to adjust the image distance of the camera module, so as to more accurately focus a light beam onto a sensor, and reduce a loss of the light beam. The camera module may be of the structures shown in FIG. 10 and FIG. 14, the adjustment coil is the first adjustment coil, and the Lorentz force generated by the first adjustment coil controls the lens group or some lenses in the lens group to move, so as to further adjust the image distance. Alternatively, the camera module may be of the structures shown in FIG. 12 and FIG. 15. In this case, the adjustment coil is the second adjustment coil, and the Lorentz force generated by the second adjustment coil pushes the second adjustment coil to move, so as to extrude the second soft film lens to deform, and further adjust the image distance.

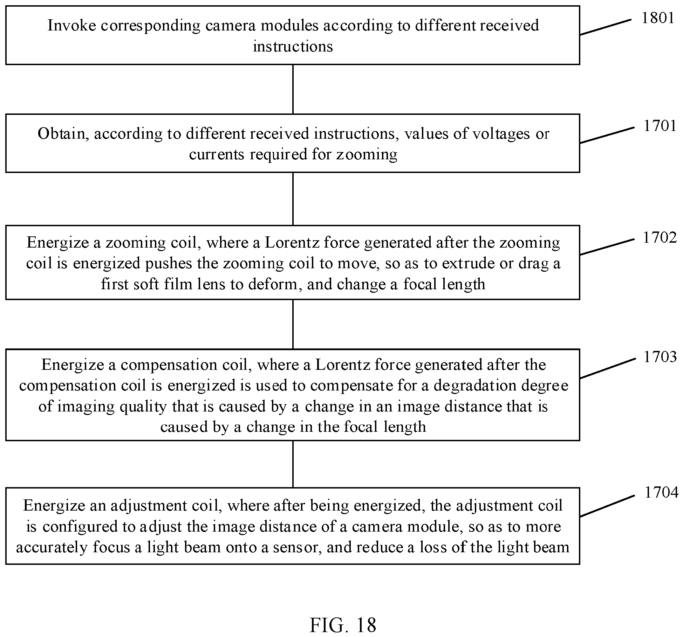

(2) An operating procedure of a plurality of camera modules is as follows: A zooming scenario recognition procedure is added based on the case (1), where a specific camera to be used needs to be determined based on a requirement. A specific procedure is shown in FIG. 18.

1801. Invoke corresponding camera modules according to different received instructions. It is assumed that there are two camera modules, which respectively have a 1-4-fold zooming magnification and a 4-8-fold zooming magnification. When a received instruction shows that a 3-fold zooming magnification is needed, the camera module having the 1-4-fold zooming magnification is invoked; and when a received instruction shows that a 6-fold zooming magnification is needed, the camera module having the 4-8-fold zooming magnification is invoked. For more camera modules, a similar manner may also be used to determine which camera module is to be invoked. In addition, 1-8-fold continuous zooming may be implemented under this assumption without an image quality "interruption" problem.

After a camera module to be invoked is determined, the remaining steps are the same as those in the case (1). Details are not described in this disclosure again. It should be understood that, the foregoing operating procedure is merely for the camera module disclosed in this disclosure. If the plurality of camera modules include a fixed-focus module, and the fixed-focus module is invoked, the fixed-focus module directly performs shooting after being invoked.

In addition, there is the following case: If there are two camera modules, which respectively have a 1-2-fold zooming magnification and a 6-8-fold zooming magnification, when a received instruction shows that a 4-fold zooming magnification is needed, no camera module may separately implement the 4-fold zooming magnification. In this case, one of the two camera modules is first invoked, for example, the camera module that is set to be in a 2-fold zooming magnification mode is invoked, to perform shooting; and then the other camera module is invoked, for example, the camera module that is set to be in a 6-fold zooming magnification mode is invoked, to perform shooting. Obtained image information is sent to the processor, to achieve an effect of the 4-fold zooming magnification through algorithm adjustment. In this case, focal lengths of the two cameras are closer to a required focal length, and a shooting effect is better than a shooting effect achieved by using a 1-fold fixed-focus lens and an 8-fold fixed-focus lens.

The camera module provided in the examples of this disclosure may be used as a separate camera, or may be used in a device that needs to perform shooting or video recording in different scenarios, such as a smartphone, a tablet computer, or a robot. According to the camera module in the examples of this disclosure, a continuous optical zooming function may be implemented, real images are captured, and an imaging effect is better. Compared with a currently commonly used solution of implementing a zooming capability in a manner of performing splicing by using a plurality of fixed-focus lenses, the camera module of this disclosure has an optical zooming capability, that is, a single lens may implement a zooming capability implemented by two fixed-focus lenses, and two lenses may achieve an effect achieved by more fixed-focus lenses. When the optical zooming capability remains unchanged, a quantity of camera modules in a terminal device may be reduced. In addition, an image quality "interruption" problem existing in current splicing of the fixed-focus lenses may be further resolved by using a plurality of camera modules disclosed in this disclosure.

An example of this disclosure provides a camera device, such as a camera or a camcorder. The camera device includes the camera module provided in the foregoing implementations and a packaging structure. The camera module further includes a controller connected to the coils in the camera module, and the controller is configured to control energization amounts of the coils. The coils include different coils mentioned in the foregoing different apparatus examples. The controller may be an application-specific integrated circuit (ASIC), a field programmable gate array (FPGA), or the like.

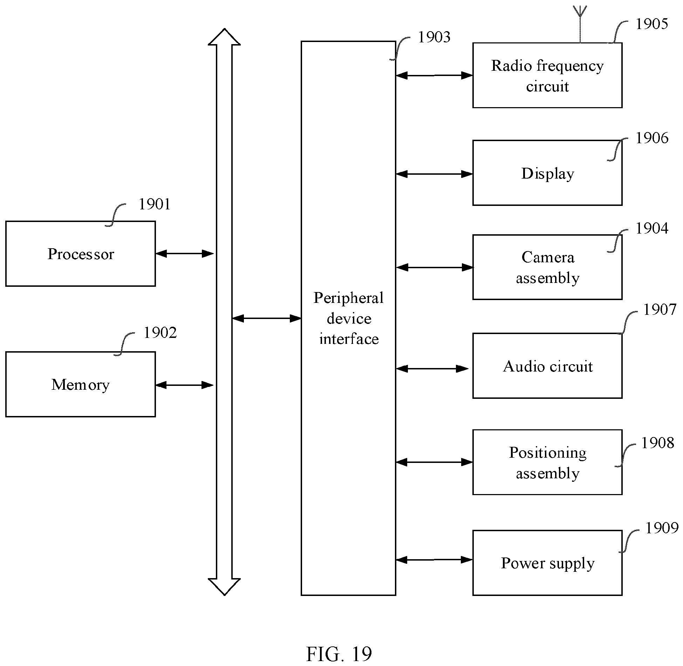

An example of this disclosure provides a terminal device, including the camera module provided in the foregoing implementations of this disclosure. FIG. 19 is a block diagram of a structure of a terminal device according to an example example of this disclosure. The terminal device may be a device that integrates a shooting or video recording function, such as a smartphone, a tablet computer, a smart robot, or a notebook computer, or may be a transportation means such as an automobile that has a shooting or video recording function. The terminal device may also be referred to as user equipment, a portable terminal, a laptop terminal, a desktop terminal, a vehicle-mounted terminal, or another name.

Usually, the terminal device further includes a processor 1901 and a memory 1902.

The processor 1901 may include one or more processing cores, for example, the processor 1901 may be a 4-core processor or an 8-core processor. The processor 1901 may be implemented in at least one hardware form of digital signal processing (DSP), an FPGA, or a programmable logic array (PLA). The processor 1901 may alternatively include a main processor and a coprocessor. The main processor is a processor configured to process data in a wake-up state, and is also referred to as a central processing unit (CPU). The coprocessor is a low-power processor configured to process data in a standby state. In some examples, the processor 1901 may integrate a graphics processing unit (GPU), and the GPU is configured to render and draw content that needs to be displayed on a display. In some examples, the processor 1901 may further include an artificial intelligence (AI) processor, and the AI processor is configured to process a computing operation related to machine learning.

The memory 1902 may include one or more computer-readable storage media, where the computer-readable storage medium may be in a non-transient state. The memory 1902 may further include a high-speed random access memory and a non-volatile memory, for example, one or more magnetic disk storage devices or flash memory storage devices. In some examples, the non-transient computer-readable storage medium in the memory 1902 is configured to store at least one instruction.

In some examples, the terminal device 3000 may optionally include a peripheral device interface 1903 and at least one peripheral device. The processor 1901, the memory 1902, and the peripheral device interface 1903 may be connected through a bus or a signal cable. Each peripheral device may be connected to the peripheral device interface 1903 through a bus, a signal cable, or a circuit board. Specifically, the peripheral device includes at least one of a camera assembly 1904, a radio frequency circuit 1905, a display 1906, an audio circuit 1907, a positioning assembly 1908, or a power supply 1909.

The peripheral device interface 1903 may be configured to connect at least one peripheral device related to input/output (I/O) to the processor 1901 and the memory 1902. In some examples, the processor 1901, the memory 1902, and the peripheral device interface 1903 are integrated on a same chip or a same circuit board. In some other examples, any one or two of the processor 1901, the memory 1902, and the peripheral device interface 1903 may be implemented on a separate chip or a separate circuit board. This is not limited in this example.

The camera assembly 1904 may include the camera module provided in the foregoing implementations, and is configured to: capture an image or a video, and send captured image or video information to the processor 1901, to perform image preview processing or storage. Optionally, the camera assembly 1904 includes a front-facing camera and a rear-facing camera. Usually, the front-facing camera is disposed on a front panel of the terminal, and the rear-facing camera is disposed on a back side of the terminal. The front-facing camera may use the camera module provided in this disclosure to adapt to zooming requirements of different scenarios. Usually, there may be more than one rear-facing camera, each of which is any one of a main camera, a depth of field camera, a wide-angle camera, and a long-focus camera, so as to implement a background blurring function by combining the main camera and the depth of field camera, implement panoramic shooting and virtual reality (VR) shooting functions by combining the main camera and the wide-angle camera, or implement a shooting function by using another combination. All the rear-facing cameras may use the camera module provided in this disclosure, or some of the rear-facing cameras are existing fixed-focus lenses, and the remaining rear-facing cameras are the camera module provided in this disclosure. In some examples, the camera assembly 1904 may further include a flash.

The radio frequency circuit 1905 is configured to receive and transmit a radio frequency (RF) signal, where the radio frequency signal is also referred to as an electromagnetic signal. The radio frequency circuit 1905 communicates with a communication network and another communication device by using the electromagnetic signal. The radio frequency circuit 1905 converts an electrical signal into an electromagnetic signal for transmission, or converts a received electromagnetic signal into an electrical signal.

The display 1906 is configured to display a user interface (UI). The UI may include a graph, a text, an icon, a video, and any combination thereof. When the display 1906 is a touch display, the display 1906 further has a capability of collecting a touch signal on a surface or above a surface of the display 1906. The touch signal may be input as a control signal into the processor 1901 for processing. In this case, the display 1906 may be further configured to provide a virtual button and/or a virtual keyboard. The virtual button and/or the virtual keyboard is also referred to as a soft button and/or a soft keyboard.

The audio circuit 1907 is configured to collect a sound wave of a user and a sound wave of an environment, convert the sound waves into electrical signals, and input the electrical signals into the processor 1901 for processing, or input the electrical signals into the radio frequency circuit 1905 to implement voice communication. For a purpose of stereo collection or noise reduction, there may be a plurality of microphones, and the microphones are separately disposed at different parts of the terminal. In some examples, the audio circuit 1907 may further include a headset jack.

The positioning assembly 1908 is configured to position a current geographic location of the terminal device, to implement navigation or a location-based service (LBS).

The power supply 1909 is configured to supply power to each component in the terminal device.

A person skilled in the art may understand that the structure shown in FIG. 19 does not constitute a limitation on the terminal device, and the terminal device may include more or fewer components than those shown in the figure, or combine some components, or use different types of component arrangement.

It should be noted that, for clarity of the descriptions of the examples of this disclosure, unrelated components may not be shown in the reference accompanying drawings, and for clarity, thicknesses of the layers and the areas may be exaggerated. Although the examples of this disclosure provide an example of a parameter including a specific value, it should be understood that the parameter does not need to be exactly equal to a corresponding value, but may be approximated to the corresponding value within an acceptable error margin or design constraint.

A person of ordinary skill in the art may understand that all or a part of the steps of the examples may be implemented by hardware or a program instructing related hardware. The program may be stored in a computer-readable storage medium. The storage medium may be a read-only memory, a magnetic disk, an optical disc, or the like.

## Claims

1. A camera module, wherein the camera module comprises two first magnetic bodies (201, 202), a lens group (203), a zooming coil (204), and a sensor (205), wherein

    the two first magnetic bodies (201, 202) are respectively located on two opposite sides of the lens group (203);

the lens group (203) comprises a first soft film lens (2031);

the zooming coil (204) is connected to a soft film of the first soft film lens (2031), and when the zooming coil (204) is energized, a Lorentz force is generated under action of a magnetic field formed by the two first magnetic bodies (201, 202), to change a shape of the first soft film lens (2031), so as to change a focal length of the first soft film lens (2031); and

the sensor (205) is configured to receive a light beam incident through the lens group (203), wherein

- according to a first option, the camera module further comprises a first compensation coil (701), the first compensation coil (701) is located between the two first magnetic bodies (201, 202), and when the first compensation coil (701) is energized, a Lorentz force is generated under action of the magnetic field formed by the two first magnetic bodies (201, 202), to change a position of the lens group (203), so as to change an image distance of the camera module; or

- according to a second option, the camera module further comprises a second compensation coil (1301), and the lens group (203) further comprises a third soft film lens (2033), and the second compensation coil (1301) is connected to a soft film of the third soft film lens (2033), and when the second compensation coil (1301) is energized, a Lorentz force is generated under action of the magnetic field formed by the two first magnetic bodies (201, 202), to change a shape of the third soft film lens (2033), so as to change an image distance of the camera module.

2. The camera module according to claim 1, wherein the camera module further comprises an annular barrel (206) having an opening on a surface, and the sensor (205) is fastened to a bottom surface that is inside the annular barrel (206) and that is opposite to the opening; and the two first magnetic bodies (201, 202) are respectively fastened onto surfaces that are inside the annular barrel (206) and that are on two sides of the bottom surface.

3. The camera module according to claim 2, wherein the camera module further comprises a lens cone (207) connected to the annular barrel (206), the lens cone (207) is connected to the annular barrel (206) through an elastic apparatus, and at least one lens in the lens group (203) is connected to the lens cone (207).

4. The camera module according to claim 3, wherein the first soft film lens (2031) comprises a soft film deformation area (301) and a lens fastening area (302), and the camera module further comprises a conductive rod (305), a slidable conductive apparatus (304), and a lead (303), wherein

the lens fastening area (302) is configured to fasten the first soft film lens (2031) onto the lens cone (207);

the conductive rod (305) is located in the lens fastening area (302), and is configured to conduct electricity;

the slidable conductive apparatus (304) is located on the conductive rod (305); and

the lead (303) is connected to both the zooming coil (204) and the slidable conductive apparatus (304).

5. The camera module according to claim 3 or 4, wherein the camera module further comprises a second magnetic body (208) located between the first soft film lens (2031) and the first magnetic body (201, 202), the second magnetic body (208) is in a one-to-one correspondence with the first magnetic body (201, 202), and a magnetic field direction of the second magnetic body (208) is the same as a magnetic field direction of the corresponding first magnetic body (201, 202).

6. The camera module according to the first option of any one of claims 1 to 5, wherein the zooming coil (204) and the first compensation coil (701) are connected in series.

7. The camera module according to claim 6, wherein the camera module further comprises a first adjustment coil (1001), the first adjustment coil (1001) is located between the two first magnetic bodies (201, 202), and a quantity of turns of the first adjustment coil (1001) is less than a quantity of turns of the first compensation coil (701), or a single-turn length of the first adjustment coil (1001) is less than a single-turn length of the first compensation coil (701).

8. The camera module according to claim 6, wherein the camera module further comprises a second adjustment coil (1201), and the lens group (203) further comprises a second soft film lens (2032); and the second adjustment coil (1201) is connected to a soft film of the second soft film lens (2032); and when the second adjustment coil (1201) is energized, a Lorentz force is generated under action of the magnetic field formed by the two first magnetic bodies (201, 202), to change a shape of the second soft film lens (2032), so as to focus the light beam onto the sensor (205).

9. The camera module according to the second option of any one of claims 1 to 5, wherein the camera module further comprises a third magnetic body located between the third soft film lens (2033) and the first magnetic body (201, 202), the third magnetic body is in a one-to-one correspondence with the first magnetic body (201, 202), and a magnetic field direction of the third magnetic body is the same as a magnetic field direction of the corresponding first magnetic body (201, 202).

10. The camera module according to claim 9, wherein the zooming coil (204) and the second compensation coil (1301) are connected in series.

11. The camera module according to claim 10, wherein the camera module further comprises a first adjustment coil (1001), the first adjustment coil (1001) is located between the two first magnetic bodies (201, 202), and when the first adjustment coil (1001) is energized, a Lorentz force is generated under action of the magnetic field formed at least by the two first magnetic bodies (201, 202), to change a position of the lens group (203), so as to change an image distance of the camera module.

12. The camera module according to claim 10, wherein the camera module further comprises a second adjustment coil (1201), and the lens group (203) further comprises a second soft film lens (2032); and the second adjustment coil (1201) is connected to a soft film of the second soft film lens (2032); and a quantity of turns of the second adjustment coil (1201) is less than a quantity of turns of the second compensation coil (1301), or a single-turn length of the second adjustment coil (1201) is less than a single-turn length of the second compensation coil (1301).

13. A terminal device (3000), wherein the terminal device (3000) comprises the camera module according to any one of claims 1 to 12, a processor (1901), and a display (1906), wherein the camera module is configured to capture image information, and the processor (1901) is configured to process the image information, to control the display (1906) to display (1906) a captured image.

**Patentansprüche**

1. Kameramodul, wobei das Kameramodul zwei erste Magnetkörper (201, 202), eine Linsengruppe (203), eine Zoomspule (204) und einen Sensor (205) umfasst, wobei die zwei ersten Magnetkörper (201, 202) jeweils auf zwei gegenüberliegenden Seiten der Linsengruppe (203) angeordnet sind;

die Linsengruppe (203) eine erste Weichfilmlinse (2031) umfasst;
die Zoomspule (204) mit einem Weichfilm der ersten Weichfilmlinse (2031) verbunden ist und, wenn die Zoomspule (204) mit Energie versorgt wird, eine Lorentzkraft unter Einwirkung eines durch die zwei ersten Magnetkörper (201, 202) gebildeten Magnetfelds generiert wird, um eine Form der ersten Weichfilmlinse (2031) zu ändern, um eine Brennweite der ersten Weichfilmlinse (2031) zu ändern; und
der Sensor (205) dazu konfiguriert ist, einen Lichtstrahl zu empfangen, der durch die Linsengruppe (203) fällt,
wobei

- gemäß einer ersten Option das Kameramodul ferner eine erste Kompensationsspule (701) umfasst, die erste Kompensationsspule (701) zwischen den zwei ersten Magnetkörpern (201, 202) angeordnet ist und, wenn die erste Kompensationsspule (701) mit Energie versorgt wird, eine Lorentzkraft unter Einwirkung des durch die zwei ersten Magnetkörper (201, 202) gebildeten Magnetfelds generiert wird, um eine Position der Linsengruppe (203) zu ändern, um einen Bildabstand des Kameramoduls zu ändern; oder
- gemäß einer zweiten Option das Kameramodul ferner eine zweite Kompensationsspule (1301) umfasst und die Linsengruppe (203) ferner eine dritte Weichfilmlinse (2033) umfasst und die zweite Kompensationsspule (1301) mit einem Weichfilm der dritten Weichfilmlinse (2033) verbunden ist und, wenn die zweite Kompensationsspule (1301) mit Energie versorgt wird, eine Lorentzkraft unter Einwirkung des durch die zwei ersten Magnetkörper (201, 202) gebildeten Magnetfelds generiert wird, um eine Form der dritten Weichfilmlinse (2033) zu ändern, um einen Bildabstand des Kameramoduls zu ändern.

2. Kameramodul nach Anspruch 1, wobei das Kameramodul ferner einen ringförmigen Lauf (206) umfasst, der eine Öffnung auf einer Fläche aufweist, und der Sensor (205) an einer Bodenfläche befestigt ist, die sich innerhalb des ringförmigen Laufs (206) befindet und die der Öffnung gegenüberliegt; und die zwei ersten Magnetkörper (201, 202) jeweils an Flächen befestigt sind, die sich innerhalb des ringförmigen Laufs (206) befinden und die sich auf zwei Seiten der Bodenfläche befinden.

3. Kameramodul nach Anspruch 2, wobei das Kameramodul ferner einen Linsenkegel (207) umfasst, der mit dem ringförmigen Lauf (206) verbunden ist, wobei der Linsenkegel (207) mit dem ringförmigen Lauf (206) über eine elastische Vorrichtung verbunden ist und mindestens eine Linse in der Linsengruppe (203) mit dem Linsenkegel (207) verbunden ist.

4. Kameramodul nach Anspruch 3, wobei die erste Weichfilmlinse (2031) einen Weichfilmverformungsbereich (301) und einen Linsenbefestigungsbereich (302) umfasst und das Kameramodul ferner einen leitfähigen Stab (305), eine gleitfähige leitfähige Vorrichtung (304) und eine Zuleitung (303) umfasst, wobei

   der Linsenbefestigungsbereich (302) dazu konfiguriert ist, die erste Weichfilmlinse (2031) an dem Linsenkegel (207) zu befestigen;
   der leitfähige Stab (305) in dem Linsenbefestigungsbereich (302) angeordnet ist und dazu konfiguriert ist, Elektrizität zu leiten;
   die gleitfähige leitfähige Vorrichtung (304) auf dem leitfähigen Stab (305) angeordnet ist; und
   die Zuleitung (303) sowohl mit der Zoomspule (204) als auch mit der gleitfähigen Vorrichtung (304) verbunden ist.

5. Kameramodul nach Anspruch 3 oder 4, wobei das Kameramodul ferner einen zweiten Magnetkörper (208) umfasst, der zwischen der ersten Weichfilmlinse (2031) und dem ersten Magnetkörper (201, 202) angeordnet ist, der zweite Magnetkörper (208) in einer Eins-zu-Eins-Entsprechung mit dem ersten Magnetkörper (201, 202) vorliegt und eine Magnetfeldrichtung des zweiten Magnetkörpers (208) die gleiche wie eine Magnetfeldrichtung des entsprechenden ersten Magnetkörpers (201, 202) ist.

6. Kameramodul gemäß der ersten Option nach einem der Ansprüche 1 bis 5, wobei die Zoomspule (204) und die erste Kompensationsspule (701) in Reihe geschaltet sind.

7. Kameramodul nach Anspruch 6, wobei das Kameramodul ferner eine erste Justierspule (1001) umfasst, die erste Justierspule (1001) zwischen den zwei ersten Magnetkörpern (201, 202) angeordnet ist und eine Windungsmenge der ersten Justierspule (1001) kleiner als eine Windungsmenge der ersten Kompensationsspule (701) ist oder eine Einzelwindungslänge der ersten Justierspule (1001) kleiner als eine Einzelwindungslänge der ersten Kompensationsspule (701) ist.

8. Kameramodul nach Anspruch 6, wobei das Kameramodul ferner eine zweite Justierspule (1201) umfasst und die Linsengruppe (203) ferner eine zweite Weichfilmlinse (2032) umfasst; und

wobei die zweite Justierspule (1201) mit einem Weichfilm der zweiten Weichfilmlinse (2032) verbunden ist; und, wenn die zweite Justierspule (1201) mit Energie versorgt wird, eine Lorentzkraft unter Einwirkung des durch die zwei ersten Magnetkörper (201, 202) gebildeten Magnetfelds generiert wird, um eine Form der zweiten Weichfilmlinse (2032) zu ändern, um den Lichtstrahl auf den Sensor (205) zu fokussieren.

9. Kameramodul gemäß der zweiten Option nach einem der Ansprüche 1 bis 5, wobei das Kameramodul ferner einen dritten Magnetkörper umfasst, der zwischen der dritten Weichfilmlinse (2033) und dem ersten Magnetkörper (201, 202) angeordnet ist, der dritte Magnetkörper in einer Eins-zu-Eins-Entsprechung mit dem ersten Magnetkörper (201, 202) vorliegt und eine Magnetfeldrichtung des dritten Magnetkörpers die gleiche wie eine Magnetfeldrichtung des entsprechenden ersten Magnetkörpers (201, 202) ist.

10. Kameramodul nach Anspruch 9, wobei die Zoomspule (204) und die zweite Kompensationsspule (1301) in Reihe geschaltet sind.

11. Kameramodul nach Anspruch 10, wobei das Kameramodul ferner eine erste Justierspule (1001) umfasst, die erste Justierspule (1001) zwischen den zwei ersten Magnetkörpern (201, 202) angeordnet ist und, wenn die erste Justierspule (1001) mit Energie versorgt wird, eine Lorentzkraft unter Einwirkung des mindestens durch die zwei ersten Magnetkörper (201, 202) gebildeten Magnetfelds generiert wird, um eine Position der Linsengruppe (203) zu ändern, um einen Bildabstand des Kameramoduls zu ändern.

12. Kameramodul nach Anspruch 10, wobei das Kameramodul ferner eine zweite Justierspule (1201) umfasst und die Linsengruppe (203) ferner eine zweite Weichfilmlinse (2032) umfasst; und
wobei die zweite Justierspule (1201) mit einem Weichfilm der zweiten Weichfilmlinse (2032) verbunden ist; und eine Windungsmenge der zweiten Justierspule (1201) kleiner als eine Windungsmenge der zweiten Kompensationsspule (1301) ist oder eine Einzelwindungslänge der zweiten Justierspule (1201) kleiner als eine Einzelwindungslänge der zweiten Kompensationsspule (1301) ist.

13. Endgerät (3000), wobei das Endgerät (3000) das Kameramodul nach einem der Ansprüche 1 bis 12, einen Prozessor (1901) und eine Anzeige (1906) umfasst, wobei
das Kameramodul dazu konfiguriert ist, Bildinformationen zu erfassen, und der Prozessor (1901) dazu konfiguriert ist, die Bildinformationen zu verarbeiten, um die Anzeige (1906) zu steuern, um ein erfasstes Bild (1906) anzuzeigen.

**Revendications**

1. Module de caméra, dans lequel le module de caméra comprend deux premiers corps magnétiques (201, 202), un groupe de lentilles (203), une bobine de zoom (204) et un capteur (205), dans lequel

   les deux premiers corps magnétiques (201, 202) sont respectivement situés sur deux côtés opposés du groupe de lentilles (203) ;
   le groupe de lentilles (203) comprend une première lentille de film souple (2031) ;
   la bobine de zoom (204) est connectée à un film souple de la première lentille de film souple (2031), et lorsque la bobine de zoom (204) est excitée, une force de Lorentz est générée sous l'action d'un champ magnétique formé par les deux premiers corps magnétiques (201, 202), pour modifier une forme de la première lentille de film souple (2031), de manière à modifier une longueur focale de la première lentille de film souple (2031) ; et
   le capteur (205) est configuré pour recevoir un faisceau lumineux incident à travers le groupe de lentilles (203),
   dans lequel

   - selon une première option, le module de caméra comprend également une première bobine de compensation (701), la première bobine de compensation (701) étant située entre les deux premiers corps magnétiques (201, 202), et lorsque la première bobine de compensation (701) est excitée, une force de Lorentz est générée sous l'action du champ magnétique formé par les deux premiers corps magnétiques (201, 202), pour modifier une position du groupe de lentilles (203), de manière à modifier une distance d'image du module de caméra ; ou
   - selon une seconde option, le module de caméra comprend également une seconde bobine de compensation (1301), et le groupe de lentilles (203) comprend également une troisième lentille de film souple (2033), et la seconde bobine de compensation (1301) est connectée à un film souple de la troisième lentille de film souple (2033), et lorsque la seconde bobine de compensation (1301) est excitée, une force de Lorentz est générée sous l'action du champ magnétique formé par les deux premiers corps magnétiques (201, 202), pour modifier une forme de la troisième lentille de film souple (2033), de manière à modifier une distance d'image du module de caméra.

2. Module de caméra selon la revendication 1, dans lequel le module de caméra comprend également un barillet annulaire (206) ayant une ouverture sur une surface, et le capteur (205) est fixé sur une surface inférieure qui est à l'intérieur du barillet annulaire (206) et qui est opposée à l'ouverture ; et les deux premiers corps magnétiques (201, 202) sont respectivement fixés sur des surfaces qui sont à l'intérieur du barillet annulaire (206) et qui sont sur deux côtés de la surface inférieure.

3. Module de caméra selon la revendication 2, dans lequel le module de caméra comprend également un cône de lentille (207) connecté au barillet annulaire (206), le cône de lentille (207) est connecté au barillet annulaire (206) à travers un appareil élastique, et au moins une lentille du groupe de lentilles (203) est connectée au cône de lentille (207).

4. Module de caméra selon la revendication 3, dans lequel la première lentille de film souple (2031) comprend une zone de déformation de film souple (301) et une zone de fixation de lentille (302), et le module de caméra comprend également une tige conductrice (305), un appareil conducteur coulissant (304), et un conducteur (303), dans lequel

   la zone de fixation de lentille (302) est configurée pour fixer la première lentille de film souple (2031) sur le cône de lentille (207) ;
   la tige conductrice (305) est située dans la zone de fixation de lentille (302), et est configurée pour conduire l'électricité ;
   l'appareil conducteur coulissant (304) est situé sur la tige conductrice (305) ; et
   le conducteur (303) est connecté à la fois à la bobine de zoom (204) et à l'appareil conducteur coulissant (304).

5. Module de caméra selon la revendication 3 ou 4, dans lequel le module de caméra comprend également un deuxième corps magnétique (208) situé entre la première lentille de film souple (2031) et le premier corps magnétique (201, 202), le deuxième corps magnétique (208) est en correspondance biunivoque avec le premier corps magnétique (201, 202), et une direction de champ magnétique du deuxième corps magnétique (208) est la même qu'une direction de champ magnétique du premier corps magnétique (201, 202) correspondant.

6. Module de caméra selon la première option de l'une quelconque des revendications 1 à 5, dans lequel la bobine de zoom (204) et la première bobine de compensation (701) sont connectées en série.

**7.** Module de caméra selon la revendication 6, dans lequel le module de caméra comprend également une première bobine de réglage (1001), la première bobine de réglage (1001) est située entre les deux premiers corps magnétiques (201, 202), et une quantité de spires de la première bobine de réglage (1001) est inférieure à une quantité de spires de la première bobine de compensation (701), ou une longueur à spire unique de la première bobine de réglage (1001) est inférieure à une longueur à spire unique de la première bobine de compensation (701).

**8.** Module de caméra selon la revendication 6, dans lequel le module de caméra comprend également une seconde bobine de réglage (1201), et le groupe de lentilles (203) comprend également une deuxième lentille de film souple (2032) ; et la seconde bobine de réglage (1201) est connectée à un film souple de la deuxième lentille de film souple (2032) ; et lorsque la seconde bobine de réglage (1201) est excitée, une force de Lorentz est générée sous l'action du champ magnétique formé par les deux premiers corps magnétiques (201, 202), pour modifier une forme de la deuxième lentille de film souple (2032), de manière à focaliser le faisceau lumineux sur le capteur (205).

**9.** Module de caméra selon la seconde option de l'une quelconque des revendications 1 à 5, dans lequel le module de caméra comprend également un troisième corps magnétique situé entre la troisième lentille de film souple (2033) et le premier corps magnétique (201, 202), le troisième corps magnétique est en correspondance biunivoque avec le premier corps magnétique (201, 202), et une direction de champ magnétique du troisième corps magnétique est la même qu'une direction de champ magnétique du premier corps magnétique (201, 202) correspondant.

**10.** Module de caméra selon la revendication 9, dans lequel la bobine de zoom (204) et la seconde bobine de compensation (1301) sont connectées en série.

**11.** Module de caméra selon la revendication 10, dans lequel le module de caméra comprend également une première bobine de réglage (1001), la première bobine de réglage (1001) est située entre les deux premiers corps magnétiques (201, 202), et lorsque la première bobine de réglage (1001) est excitée, une force de Lorentz est générée sous l'action du champ magnétique formé au moins par les deux premiers corps magnétiques (201, 202), pour modifier une position du groupe de lentilles (203), de manière à modifier une distance d'image du module de caméra.

**12.** Module de caméra selon la revendication 10, dans lequel le module de caméra comprend également une seconde bobine de réglage (1201), et le groupe de lentilles (203) comprend également une deuxième lentille de film souple (2032) ; et la seconde bobine de réglage (1201) est connectée à un film souple de la deuxième lentille de film souple (2032) ; et une quantité de spires de la seconde bobine de réglage (1201) est inférieure à une quantité de spires de la seconde bobine de compensation (1301), ou une longueur à spire unique de la seconde bobine de réglage (1201) est inférieure à une longueur à spire unique de la seconde bobine de compensation (1301).

**13.** Dispositif terminal (3000), dans lequel le dispositif terminal (3000) comprend le module de caméra selon l'une quelconque des revendications 1 à 12, un processeur (1901), et un affichage (1906), dans lequel le module de caméra est configuré pour capturer des informations d'image, et le processeur (1901) est configuré pour traiter les informations d'image, pour commander l'affichage (1906) pour afficher (1906) une image capturée.

FIG. 1

EP 4 030 744 B1

FIG. 2

FIG. 3

FIG. 4

FIG. 5

FIG. 6

204

701

201

205

203

202

2031

FIG. 7

701

201

205

203

202

2031  204

FIG. 8

FIG. 9

FIG. 10

FIG. 11

FIG. 12

FIG. 13

FIG. 14

FIG. 15

FIG. 16

| Obtain, according to different received instructions, values of voltages or currents required for zooming | 1701 |

| Energize a zooming coil, where a Lorentz force generated after the zooming coil is energized pushes the zooming coil to move, so as to extrude or drag a first soft film lens to deform, and change a focal length | 1702 |

| Energize a compensation coil, where a Lorentz force generated after the compensation coil is energized is used to compensate for a degradation degree of imaging quality that is caused by a change in an image distance that is caused by a change in the focal length | 1703 |

| Energize an adjustment coil, where after being energized, the adjustment coil is configured to adjust the image distance of a camera module, so as to more accurately focus a light beam onto a sensor, and reduce a loss of the light beam | 1704 |

FIG. 17

Invoke corresponding camera modules according to different received instructions ⟋ 1801

Obtain, according to different received instructions, values of voltages or currents required for zooming ⟋ 1701

Energize a zooming coil, where a Lorentz force generated after the zooming coil is energized pushes the zooming coil to move, so as to extrude or drag a first soft film lens to deform, and change a focal length ⟋ 1702

Energize a compensation coil, where a Lorentz force generated after the compensation coil is energized is used to compensate for a degradation degree of imaging quality that is caused by a change in an image distance that is caused by a change in the focal length ⟋ 1703

Energize an adjustment coil, where after being energized, the adjustment coil is configured to adjust the image distance of a camera module, so as to more accurately focus a light beam onto a sensor, and reduce a loss of the light beam ⟋ 1704

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011290887 A1

- CN 109839713 A